Europäisches Patentamt

European Patent Office

Office européen des brevets

(11) Publication number : **0 364 912 B1**

# EUROPEAN PATENT SPECIFICATION

(45) Date of publication of patent specification :
14.10.92 Bulletin 92/42

(51) Int. CI.⁵ : **A23J 1/20**

(21) Application number : **89119130.6**

(22) Date of filing : **14.10.89**

(54) **Method for thermally treating lactoferrin.**

(30) Priority : **17.10.88 JP 259311/88**
**17.10.88 JP 259312/88**

(43) Date of publication of application :
**25.04.90 Bulletin 90/17**

(45) Publication of the grant of the patent :
**14.10.92 Bulletin 92/42**

(84) Designated Contracting States :
**BE DE FR GB IT**

(56) References cited :
JOURNAL OF FOOD SCIENCE, vol. 48, no. 1,
January/February 1983, pages 42-46,70,
Chicago, Illinois, US; S. VARUNSATIAN et
al.:"Effects of Ca++, Mg++ and Na+ on heat
aggregation of whey protein concentrates"
INT. J. BIOCHEMISTRY, vol. 19, no. 10, 1987,
pages 1001-1008, Pergamon Journals Ltd, GB;
J.P. HARRINGTON et al.: "Unfoldingof iron
and copper complexes of human lactoferrin
and transferrin"

(73) Proprietor : **SNOW BRAND MILK PRODUCTS
CO., LTD.**
**1-1, Naebocho 6-Chome Higashi-ku**
**Sapporo-shi Hokkaido (JP)**

(72) Inventor : **Dosako, Shunichi**
**616-5-15-39, Kitaurawa**
**Urawa-shi Saitama-ken (JP)**
Inventor : **Shinooka, Rika**
**2-5-19, Hoshinomiya**
**Tokorozawa-shi Saitama-ken (JP)**
Inventor : **Tanaka, Maki**
**303-270, Higashimitsugi**
**Sayama-shi Saitama-ken (JP)**

(74) Representative : **Schüler, Horst, Dr.**
**Patentanwalt, Kaiserstrasse 69**
**W-6000 Frankfurt/Main 1 (DE)**

## Description

## BACKGROUND OF THE INVENTION

### 1. Field of the Invention

The present invention relates to a method for thermally treating lactoferrin having various physiological activities without impairing its physiological function, the aforesaid lactoferrin being a pharmacodynamically important milk protein.

### 2. Description of the Prior Art

Lactoferrin is an iron-binding glycoprotein present in an external secretion of milk, and it has various physiological activities such as bacteriostatic action to pathogenic germs, differentiation regulatory action for leukopenia, enhancement of microbicidal activity of neutrophils, proliferation action of lymphocytes, and iron-absorption regulation action. Therefore, the lactoferrin is the important milk protein not only from a nutritional viewpoint but also from a pharmacodynamical viewpoint.

These physiological function of the lactoferrin arises mainly from the iron-binding ability of the lactoferrin, and the latter exerts the ability to chelate-bind iron, only when the three-dimensional stereostructure of the lactoferrin is kept up.

However, when the three-dimensional stereostructure of the lactoferrin is broken by heating, the lactoferrin precipitates. In fact, even if the concentration of the lactoferrin is as low as about 0.5%, the lactoferrin precipitates merely by heating at 60°C for 15 minutes. Therefore, as means for removing bacteria from an aqueous lactoferrin solution for the sake of sterilization, there is only a bacterial removal technique by the use of a filter.

In the case that the lactoferrin is utilized for the purpose of reinforcing iron in food and drink, a process for pasteurizing the lactoferrin is essential. For example, the refreshing beverage manufacturing standards of the Food Sanitation Act stipulate that (1) when a pH is 4.0 or less, heating at 65°C for 10 minutes or pasteurization having an effect equal to or higher than this heating shall be performed, and (2) when a pH is 4.0 or more, heating at 85°C for 30 minutes or pasteurization having an effect equal to or higher than this heating shall be performed. In consequence, the lactoferrin which has undergone the filter bacteria removal cannot be used as a material for refreshing beverage and the like.

Furthermore, when an attempt is made to obtain the powder of the lactoferrin by heating and then spray-drying an aqueous lactoferrin solution, precipitates are formed, so that spray nozzles are clogged and the operation cannot be continued any more. In addition, the iron-binding ability which is the property of the lactoferrin itself are lost by the heating, and the physiological function is also impaired inconveniently.

In this connection, it is also considered that the means of freeze-drying can be applied to prepare the powder of the lactoferrin, but such means increases a manufacturing cost. Thus, this means is not advantageous in utilizing the lactoferrin.

## SUMMARY OF THE INVENTION

The present invention has been achieved under such situations, and an object of the present invention is to provide a method for thermally treating an aqueous lactoferrin solution for the purposes of thermally pasteurizing and powdering the same by spray-drying without impairing the property of the lactoferrin itself, i.e., iron-binding ability which is a base to exhibit various physiological function characteristics.

Other objects of the present invention will become apparent from the following description.

The feature of the present invention resides in that ionic strength I of the aqueous lactoferrin solution is first adjusted so as to satisfy the conditions of the following formulae, and the aqueous lactoferrin solution is then thermally treated:

$$\log I \leqq -T/10 + 5 \ (60 \leqq T \leqq 80°C)$$
$$\log I \leqq -3 \ (T \geqq 80°C)$$

wherein T is a temperature (°C).

## DETAILED DESCRIPTION OF THE INVENTION

Lactoferrin used in the present invention may take the structure where iron is combined or the other structure where iron is released, so long as it has the ability to combine with iron when it is in an unmodified state.

Heretofore, as techniques of separating and purifying the lactoferrin, some methods are known which are,

2

for example, a method of utilizing an ion exchange resin (Gordon et al., Biochim. Biophys. Acta, 60, p. 410-411, 1962), a method of using heparin affinity chromatography (Blockberg et al., FEBS Lett., 109, p. 180, 1980), a method of using an anti-latoferrin monoclonal antibody immobilized column (Japanese Laid-open Patent Application No. 145200/1986), and a method of using a carrier which has been subjected to a sulfuric ester treatment (Japanese Application No. 88450/1987). However, the lactoferrin may be prepared by any method, so long as the prepared lactoferrin has the ability to combine with iron when it is in an undenatured state.

The lactoferrin used in a thermal treatment of the present invention may be in a solution state or may be what has been prepared by dissolving its powder. In the thermal treatment for heating pasteurization, the concentration of the aqueous lactoferrin solution may be high. Even in the heating treatment for the formation of the powdery lactoferrin by the spray drying, the concentration of the aqueous lactoferrin solution is not limited particularly, but in a usual case, it is preferred that the concentration of the lactoferrin is heightened up to a level of 10 to 20%. When the concentration of the aqueous lactoferrin solution is in excess of 20%, the viscosity of the aqueous solution increases excessively, so that spray operation is difficult; when it is lower than 10%, the powder obtained by the spray drying tends to be fine.

The important point of the present invention is that the ionic strength I of the aqueous lactoferrin solution is adjusted so as to satisfy the specific conditions, i.e., the following formulae:

$$\log I \leqq -T/10 + 5 \qquad (60 \leqq T \leqq 80°C)$$
$$\log I \leqq -3 \qquad (T \geqq 80°C)$$

wherein T is a temperature (°C).

In the case that T is less than 60°C, the lactoferrin is not denatured, and therefore it is not particularly necessary to adjust the ionic strength I. However, in the case that T is more than 60°C, and when the ionic strength I deviates from the above-mentioned conditions represented by the formulae, the lactoferrin precipitates and the iron-binding ability declines.

Adjusting the ionic strength of the aqueous lactoferrin solution so as to meet the above-mentioned conditions can be achieved by dissolving the lactoferrin in deionized water.

In particular, when the aqueous lactoferrin solution having a high salt concentration is subjected to the heating treatment for sterilization, it is required to adjust the ionic strength I of the aqueous solution by desalting so as to satisfy the above conditions represented by the formulae.

On the other hand, when the aqueous lactoferrin solution is thermally treated by spray drying, it is particularly required to adjust the ionic strength I of the aqueous solution to $10^{-3}$ or less. In this case, much attention is paid so that the ionic strength of the aqueous lactoferrin solution may not exceed a level of $10^{-3}$. Because if the ionic strength of the aqueous lactoferrin solution is in excess of $10^{-3}$, precipitates are formed during the spray drying at the time of the heating concentration, with the result that spray nozzles are clogged with the formed precipitate.

Therefore, in the case that the aqueous lactoferrin solution having a high salt concentration is subjected to the spray drying treatment, it should be confirmed that after the sufficient desalting, the ionic strength of the aqueous solution is $10^{-3}$ or less.

As conditions for the spray drying of the aqueous lactoferrin solution, usual spray drying conditions may be employed, and for example, an inlet temperature is from 140 to 180°C and an outlet temperature is from 80 to 95°C.

Table 1 shows the influence of the ionic strength of the aqueous lactoferrin solution and heating temperature on the formation state of the precipitate.

In this case, the concentration of an aqueous lactoferrin solution sample was adjusted to 10%.

## Table 1

(influence of ionic strength of 10% aqueous lactoferrin solution and heating temperature on precipitation state)

| Heating Conditions | 0 | Ionic Strength | | | |
| --- | --- | --- | --- | --- | --- |
| | | $10^{-4}$ | $10^{-3}$ | $10^{-2}$ | $10^{-1}$ |
| at 60°C for 30 min. | − | − | − | − | ± |
| at 70°C for 15 min. | − | − | − | ± | + |
| at 80°C for 10 min. | − | − | − | + | ++ |
| at 90°C for 10 min. | − | − | ± | + | +++ |

The symbols in the table have the following means:

−: No precipitate was formed.

±: The precipitate was slightly formed.

+: The precipitate was formed.

++: The precipitate was appreciably formed.

+++: The precipitate was noticeablly formed.

Table 2 shows the influence of the ionic strength of the aqueous lactoferrin solution and heating temperature on the iron-binding ability of the lactoferrin after the heating treatment. In this table, the values indicating the iron-binding ability are on percent.

In this case, the concentration of an aqueous lactoferrin solution sample was adjusted to 10%.

4

Table 2

[influence of ionic strength of 10% aqueous lactoferrin
solution and heating temp. on iron-bonding power (%)]

| Heating Conditions | Ionic Strength | | | | |
| | 0 | $10^{-4}$ | $10^{-3}$ | $10^{-2}$ | $10^{-1}$ |
| --- | --- | --- | --- | --- | --- |
| at 60°C for 30 min. | 100 | 100 | 100 | 94 | 100 |
| at 70°C for 15 min. | 100 | 100 | 100 | 90 | 77 |
| at 80°C for 10 min. | 97 | 97 | 94 | 60 | 13 |
| at 90°C for 10 min. | 97 | 94 | 90 | 30 | 0 |

The values of the iron-binding ability (%) in Table 2 were calculated as follows:

First, 1 drop of a 5% aqueous sodium bicarbonate was added to 1 ml of a supernatant obtained by removing precipitates from the aqueous lactoferrin solution, and an absorbance $OD_o$ at 465 nm was then measured. Afterward, 100 $\mu\ell$ of a 2% $FeCl_3 \cdot 6H_2O$ solution was added thereto, and an absorbance $OD_f$ at 465 nm was then measured. In like manner, measurement was made for the aqueous solution of the unheated lactoferrin to obtain absorbances $\overline{OD_o}$ and $\overline{OD_f}$. The iron-binding ability was calculated on the basis of the measured values in accordance with the following formula:

Iron-binding ability

$$= [(OD_f\text{-}OD_o)/OD_o]/[(\overline{OD_f}\text{-}\overline{OD_o})/\overline{OD_o}] \times 100 \ (\%)$$

According to the method of the present invention, the lactoferrin can be thermally treated for heating pasteurization and spray drying without forming any precipitate, and the thermally treated lactoferrin can retain the iron-binding ability sufficiently.

Therefore, the present invention permits the thermal pasteurization of the aqueous lactoferrin solution in a state utilizable as food and beverage without impairing the physiological function of the lactoferrin, and therefore the thus treated aqueous solution can be utilized conveniently to prepare the food and beverage.

For example, an iron-reinforced beverage can be prepared by the following procedure: Lactoferrin, an iron agent and sodium bicarbonate are dissloved in water to form an aqueous solution, or alternatively iron-saturated lactoferrin obtained by chelate-binding ferric ions to the lactoferrin is dissolved in water to form an aqueous solution. Afterward, the ionic strength of the aqueous solution is adjusted to a certain level, and the aqueous solution is then thermally pasteurized. On the other hand, a raw material solution for beverage is pasteurized by heating and then cooled. Both of the thus prepared solutions are mixed, and containers are filled with the resulting liquid mixture, whereby the iron-reinforced beverage can be prepared.

Furthermore, the lactroferrin powder obtained by subjecting the aqueous lactoferrin solution to a heating treatment and a spray drying treatment in accordance with the present invention can also retain the iron-binding ability of the lactoferrin itself satisfactorily, and it also has various physiological functions derived from this iron-binding ability. Accordingly, the lactroferrin powder can be widely utilized as food materials.

Now, the present invention will be described in detail in reference to examples.

Example 1

In 1 liter of deionized water was dissolved 100 g of a freeze-dried bovine lactoferrin powder. This aqueous lactoferrin solution was placed in a vessel with a lid, and it was then heated in a hot water at 85°C for 30 minutes to pasteurize itself. After the heating, the aqueous lactoferrin solution was immediately cooled to room temperature with running water. At this time, the formation of precipitates were not observed at all. When measured after cooling, the iron-binding ability of the bovine lactoferrin was 97%.

Example 2

Ten tons of raw skim milk was caused to flow through a carrier comprising chitosan beads to which sulfuric ester was attached, and bovine lactoferrin which was absorbed thereon was then eluted with a 1 M saline solution. The eluate was desalted/concentrated through an ultrafilter (DDS 20), so that 20 liters of a lactoferrin solution was obtained which had a protein concentration of 5.0%. When calculated from a sodium ion concentration by an atomic absorption spectrometer, the ionic strength of this solution was $4 \times 10^{-4}$.

Thus, the solution was then pasteurized by heating itself at a temperature of 95°C for 4 seconds by the use of a plate type heat-exchanger, and then cooled to 7°C. No precipitate was observed, and the iron-binding ability of the thermally pasteurized lactoferrin was 98%.

Example 3

In 180 milliliters of deionized water was dissolved 20 g of a freeze-dried bovine lactoferrin powder. This aqueous lactoferrin solution was dried at an inlet temperature of 140°C and at an outlet temperature of 85°C by the use of a small-sized spray dryer (YAMATO Pulvis Basic Unit Model GB-21) in order to obtain about 12 g of a dried powder. This powder was then dissolved in water so as to become a concentration of 1%. At this time, the powder could be completely dissolved therein.

Next, for the thus obtained lactoferrin powder, the iron-binding ability was measured by the following procedure:

The thus obtained powder and the freeze-dried powder which had undergone no spray drying treatment were each dissolved in water so as to become a concentration of 1% by weight, and 1 drop of a 5% sodium bicarbonate was added thereto. Afterward, absorbance at 465 nm of each solution was measured. Here, the respective absorbances were represented by $A_{so}$ and $A_{fo}$.

Next, 50 $\mu\ell$ of $FeCl_3 \cdot 6H_2O$ at a concentration of 7 mg/ml was added to 5 ml of the lactroferrin solution, and absorbance at 465 nm of each solution was measured again. Here, the respective absorbances were represented by $A_{sf}$ and $A_{ff}$.

Iron-binding ability was calculated in accordance with the formula:
$$[(A_{sf} - A_{so})/A_{so}]/[(A_{ff} - A_{fo})/A_{fo}] \times 100 \ (\%)$$
The iron-binding ability of the spray-dried powder obtained in this example was 91%.

Example 4

Ten tons of raw skim milk was caused to flow through a carrier comprising chitosan beads to which sulfuric ester was attached, and bovine lactoferrin which was absorbed thereon was then eluted with a 1 M saline solution. The eluate was desalted/concentrated through an ultrafilter (DDS 20), so that 20 liters of a lactoferrin solution was obtained which had a protein concentration of 5.0%. When calculated from a sodium ion concentration by an atomic absorption spectrometer, the ionic strength of this solution was $4 \times 10^{-4}$.

Afterward, this solution was concentrated to 8 liters by a vacuum evaporator and then subjected to a spray drying treatment. In this case, an inlet temperature was 150°C, and an outlet temperature thereof was 87°C. The amount of the recovered bovine lactoferrin was 780 g.

When measured in the same manner as in Example 3, the iron-binding ability of the obtained lactoferrin was 94%.

**Claims**

1.  A method for thermally treating an aqueous lactoferrin solution which comprises the steps of adjusting the ionic strength I of said aqueous lactoferrin solution so as to satisfy the conditions of the following formulae, and then heating said aqueous lactoferrin solution:
$$\log I \le -T/10 + 5 \qquad (60 \le T \le 80°C)$$
$$\log I \le -3 \qquad (T \ge 80°C)$$
    wherein I is an ionic strength, and
    T is a temperature (°C).

2.  A method for thermally treating an aqueous lactoferrin solution according to Claim 1 wherein said thermal treatment intends to pasteurize said aqueous lactoferrin solution.

3. A method for thermally treating an aqueous lactoferrin solution according to Claim 1 wherein said thermal treatment intends to spray-dry said aqueous lactoferrin solution.

4. A method for thermally treating an aqueous lactoferrin solution according to Claim 3 wherein the ionic strength of said aqueous lactoferrin solution is adjusted to $10^{-3}$ or less.

5. A method for thermally treating an aqueous lactoferrin solution according to Claim 3 or 4 wherein the concentration of said aqueous lactoferrin solution is from 10% to 20%.

**Patentansprüche**

1. Ein Verfahren zur thermischen Behandlung einer wässrigen Laktoferrinlösung, das die Verfahrensschritte umfaßt, daß die Ionenstärke I dieser wässrigen Laktoferrinlösung so eingestellt wird, daß die Bedingungen der folgenden Formeln erfüllt sind, und dann diese wässrige Laktoferrinlösung erhitzt wird:

$$\log I \leq -T/10 + 5 \qquad (60 \leq T \leq 80°C)$$
$$\log I \leq -3 \qquad (T \geq 80°C)$$

wobei I eine Ionenstärke ist und
T eine Temperatur (°C) ist.

2. Ein Verfahren zur thermischen Behandlung einer wässrigen Laktoferrinlösung nach Anspruch 1, bei dem diese thermische Behandlung den Zweck hat, die wässrige Laktoferrinlösung zu pasteurisieren.

3. Ein Verfahren zur thermischen Behandlung einer wässrigen Laktoferrinlösung nach Anspruch 1, bei dem diese thermische Behandlung den Zweck hat, die wässrige Laktoferrinlösung sprühzutrocknen.

4. Ein Verfahren zur thermischen Behandlung einer wässrigen Laktoferrinlösung nach Anspruch 3, bei dem die Ionenstärke dieser wässrigen Laktoferrinlösung auf $10^{-3}$ oder weniger eingestellt wird.

5. Ein Verfahren zur thermischen Behandlung einer wässrigen Laktoferrinlösung nach Anspruch 3 oder 4, bei dem die Konzentration der wässrigen Laktoferrinlösung von 10 % bis 20 % beträgt.

**Revendications**

1. Procédé pour le traitement thermique d'une solution aqueuse de lactoferrine, qui comprend les étapes consistant à ajuster la force ionique I de ladite solution aqueuse de lactoferrine de façon à satisfaire aux conditions des formules suivantes, et ensuite, à chauffer ladite solution aqueuse de lactoferrine :

$$\log I \leq -T10 + 5 \qquad (60 \leq T \leq 80°C)$$
$$\log I \leq -T3 \qquad (T \geq 80°C)$$

formules dans lesquelles I est une force ionique, et
T est une température (°C).

2. Procédé pour le traitement thermique d'une solution aqueuse de lactoferrine selon la revendication 1, dans lequel ledit traitement thermique a pour objectif de pasteuriser ladite solution aqueuse de lactoferrine.

3. Procédé pour le traitement thermique d'une solution aqueuse de lactoferrine selon la revendication 1, dans lequel ledit traitement thermique a pour objectif de sécher par pulvérisation ladite solution aqueuse de lactoferrine.

4. Procédé pour le traitement thermique d'une solution aqueuse de lactoferrine selon la revendication 3, dans lequel la force ionique de ladite solution aqueuse de lactoferrine est ajustée à $10^{-3}$ ou moins.

5. Procédé pour le traitement thermique d'une solution aqueuse de lactoferrine selon la revendication 3 ou 4, dans lequel la concentration de ladite solution aqueuse de lactoferrine est comprise entre 10 % et 20 %.